# EUROPEAN PATENT SPECIFICATION

(11) **EP 2 977 179 B1**
(45) Date of publication and mention of the grant of the patent: **16.01.2019**
(21) Application number: 13878928.4
(22) Date of filing: 29.04.2013
(51) Int. Cl.: B29C 49/56, B29L 22/00

(54) **BOTTLE BLOWING MACHINE**
FLASCHENBLASMASCHINE
MACHINE DE SOUFFLAGE DE BOUTEILLE

(30) Priority: 19.03.2013 CN 201310089027
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); SHEN, Xiangyu, Zhangjiagang Jiangsu 215624 (CN); YANG, Xiaying, Zhangjiagang Jiangsu 215624 (CN); HE, Deping, Zhangjiagang Jiangsu 215624 (CN)
(74) Representative: De Vries & Metman
(86) International application number: PCT/CN2013/075025
(87) International publication number: WO 2014/146334

(56) References cited:
- EP-A1- 1 535 719
- CN-A- 101 823 328
- CN-A- 102 380 949
- CN-A- 102 962 985
- US-A1- 2007 292 550
- US-A1- 2010 203 185

## Description

### Field of the Invention

The present invention relates to a bottle blowing machine.

### Description of the Related Art

A bottle blowing machine is a machine for blowing plastic granules (soften as liquid) or a bottle preform into a bottle by a certain process. Generally the bottle blowing machine is provided with a mould opening and closing mechanism, a bottom mould elevating mechanism, a bottom mould locking mechanism and a driving mechanism.

A conventional mould opening and closing mechanism comprises a machine frame, a fixed mould plate and a moving mould plate which are mounted on the machine frame. A mould locking mechanism is provided at the joint of the fixed mould plate with the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame.

A conventional bottom mould elevating mechanism comprises an elevating bracket and a bottom mould cam. The elevating bracket is provided with a guide rail, a guide rod and a roll wheel. The elevating bracket is mounted into a sliding groove of the machine frame by the guide rail. A spring is sheathed on the guide rod, a wheel shaft protruding towards a side is provided at the bottom of the elevating bracket, and the roll wheel is mounted on the wheel shaft. The bottom mould cam is located above the roll wheel and contacts the roll wheel. The guide rod is mounted on a support plate laterally extending on the top of the elevating bracket. The spring is located between the support plate and the machine frame. The bottom mould elevating mechanism presses the elevating bracket by means of the bottom mould cam such that the bottom mould descends, and the elevating bracket is uplifted under the effect of the spring such that the bottom mould rises.

A conventional bottom mould locking mechanism comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

The driving mechanisms work in self-driven way, and the bottle blowing machines of the prior art are bulky and complicated in structure,, thus, the bottle blowing machines are inconvenient in operation and high-cost.

Further devices are known from US 2010/203185 A1 and US 2007/292550 A1. US 2010/203185 relates to a device for blow molding containers. The blow mold which is composed of at least two blow mold segments is held in place by mold supports of a blow molding station that is arranged on a supporting structure. A bottom part is used in addition to the blow mold segments. Both the mold supports and the bottom part are arranged in such a way that they can be mechanically positioned. The mold supports and the bottom part are mechanically coupled to each other. One of the mold supports is immobile and the other mold support is swiveled to the supporting structure. US2007/292550 invention relates to a device for blow molding containers. Initially, pre-forms, which are made of a thermoplastic material, are tempered and, subsequently, transformed into containers inside a blow form using the effects of a pressurized medium. The blow form which is made up of at least two blow molding segments is held in place by mold supports of a blowing station. A bottom part is used in addition to the blow molding segments. Both the mold supports and the bottom part are arranged in such a way that they can be mechanically positioned. The mold supports and the bottom part are permanently coupled to each other via a common mechanical drive unit.

### Summary of the Invention

An object of the invention is to provide a bottle blowing machine.

For the foregoing purpose, the following technical solution is utilized in the invention. A bottle blowing machine, comprising
a machine frame;
a mould opening and closing assembly having a mould opening state and a mould closing state, which comprises a fixed mould plate fixedly disposed on the machine frame, a bottom mould slidable relative to the fixed mould plate in a vertical direction, and a moving mould plate rotatably connected with the fixed mould plate by a rotation shaft, when the mould opening and closing assembly is in the mould closing state, the fixed mould plate, the moving mould plate and the bottom mould together enclose to provide a cavity;
an elevating assembly comprising a protrusion fixed disposed on the rotation shaft, an elevating rod fixedly connected with the bottom mould, and a sliding block fixed on the elevating rod, a guiding groove is opened on the protrusion and the sliding block is slidably inserted into the guiding groove, in the course of rotation of the rotation shaft, the contact position of the guiding groove and the sliding block rises or descends, and the sliding block moves in the up-down direction under the guiding of the guiding groove;
a bottom mould locking assembly comprising a first locking part slidably disposed on the machine frame, a swing member swingably connected with the machine frame around a first axis for driving the sliding of the first locking part, a rotation member fixedly connected with the rotation shaft and rotatable relative to the machine frame around a second axis for controlling the swinging of the swing member relative to the machine frame, and a second locking part fixedly disposed on the moving mould plate, when the mould opening and closing assembly is in the mould closing state, the first locking part and the second locking part respectively contact against the bottom mould such that the bottom mould is separated from the machine frame; and
a power source for driving the rotation of the rotation shaft.

Preferably, the rotation shaft sequentially extends through the moving mould plate, the rotation member and the protrusion from up to down.

Preferably, the mould opening and closing assembly also comprise a locking mechanism for locking the moving mould plate with the fixed mould plate when in the mould closing state, the locking mechanism comprising a connecting shaft slidably disposed on the fixed mould plate, a connecting rod fixedly connected with the connecting shaft and a locking pin fixedly connected with the connecting rod, at least one first connecting convex platform is provided on the moving mould plate, and a pin hole is opened on the connecting convex platform, a second connecting convex platform staggered with the first connection protrusion in up-down direction is provided on the fixed mould plate, and a hole is opened on the second connecting protrusion for the connecting rod and the locking pin sliding therein, when in the mould opening state, the locking pin is positioned in the hole, and when in the mould closing state, the locking pin slides relative to the second connecting protrusion and extends through the hole to insert into the pin hole.

Preferably, the rotation member has a guiding surface thereon and a projection is formed on the swing member, the projection slidably contacts with the guiding surface relative to each other, and the distance between the contact position of the projection with the guiding surface and the second axis changes with the rotation of the rotation member.

Preferably, an elastic member is arranged between the swing member and the machine frame for providing a restoring force for the swing member, a convex column is formed on the first locking part and a U-shaped portion is provided on the swing member at a distance from the first axis, and the convex column is slidably inserted into the U-shaped portion.

More preferably, the machine frame comprises a supporting frame, an upper frame located above the support frame and an upright frame fixedly connected between the support frame and the upper frame, the mould opening and closing assembly and bottom locking assembly are located above the support frame, and the protrusion is located below the support frame.

More preferably, a first through-hole for the elevating rod extending through therein and a second through-hole for the rotation shaft extending through therein respectively are opened on the support frame, the elevating rod is slidable in the first through-hole in the up-down direction, and the rotation shaft is rotatable in the second through-hole.

More preferably, an upper end of the rotation shaft is rotatably connected with the upper frame.

More preferably, the first axis and second axis are parallel to each other, and the rotation member, the swing member and the first locking part are located above an upper surface of the support frame.

Preferably, a swing arm is connected on a lower end of the rotation shaft, and the power source drives the rotation of the rotation shaft by the swing arm.

More preferably, the swing arm is fixedly connected with the lower end of the rotation shaft.

Preferably, the axis of rotation of the rotation shaft is parallel to the direction of movement of the elevating rod relative to the machine frame, and the guiding groove inclinedly extends relative to a plane perpendicular to the axis of rotation.

More preferably, the protrusion has an arc-shaped side on which the guiding groove is opened, and the central axis of the circumference where the arc-shaped side is and the axis of rotation of the rotation shaft coincide. Preferably, the moving mould plate is substantially provided along a vertical direction and the extending direction of height of the moving mould plate is parallel to the shaft axis of the rotation shaft.

Due to the above technical solution, the present invention has the following advantages as compared with the prior art: in the bottle blowing machine of invention, three assemblies are simultaneously driven by one rotation shaft to move, and the steps of mould closing, elevating and locking are simultaneously performed. Thus, the bottle blowing machine of the invention is simple in structure and convenient in operation, thereby improving the efficiency of the process of bottle blowing.

### Brief Description of the Drawings

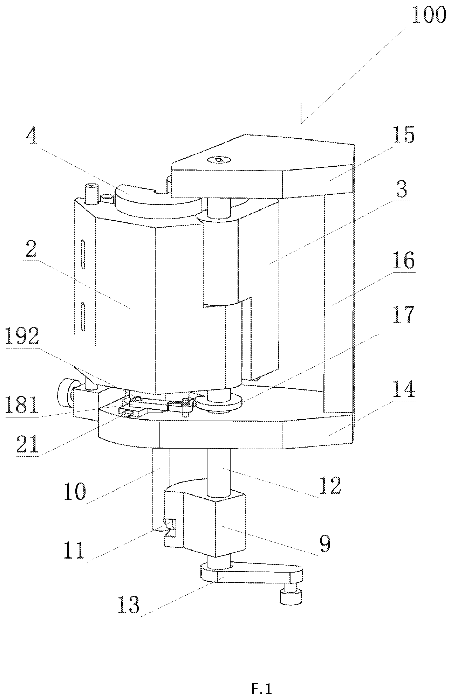

Fig.1 is a schematic drawing of a bottle blowing machine in mould opening state according to the invention.

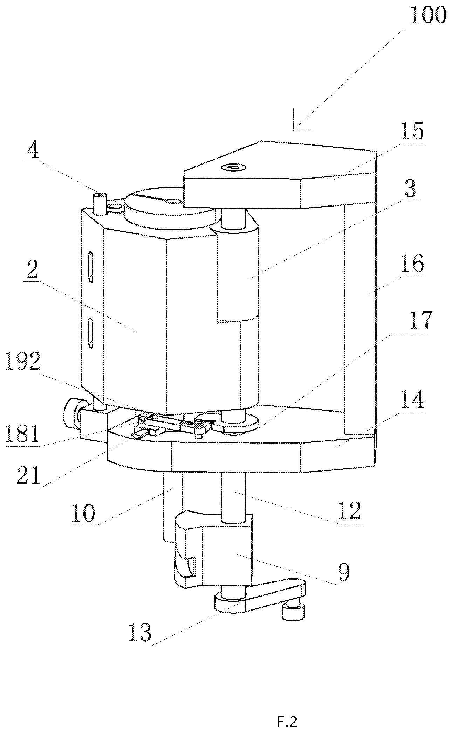

Fig.2 is a schematic drawing of the bottle blowing machine in mould closing state according to the invention.

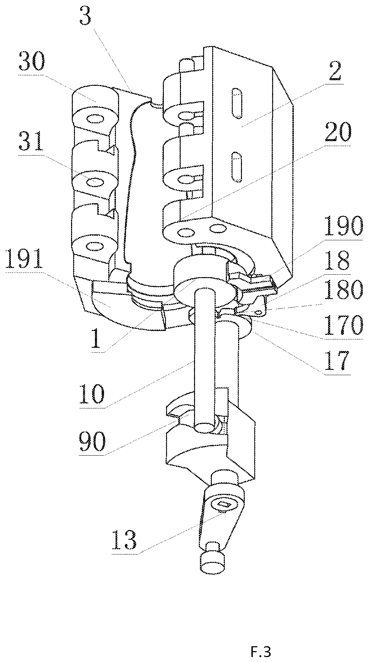

Fig.3 is a schematic drawing of the bottle blowing machine in mould opening state according to the invention, wherein the machine frame is omitted.

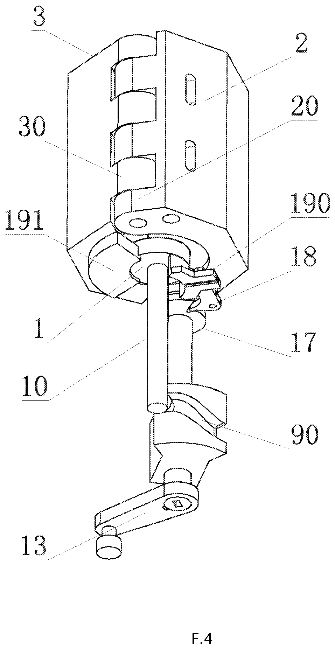

Fig.4 is a schematic drawing of the bottle blowing machine in mould closing state according to the invention, wherein the machine frame is omitted.
Fig.5 is a schematic drawing of a locking mechanism of the bottle blowing machine according to the invention.

Wherein: 1. a bottom mould; 2. a fixed mould plate; 100. a machine frame; 20. a second connecting protrusion; 22. a hole; 3. a moving mould plate; 30. a first connecting convex platform; 31. a pin hole; 4. a mould; 5. a connecting shaft; 6. a locking pin; 7. a connecting rod; 8. a driving block; 9. a protrusion; 90. a guiding groove; 10. an elevating rod; 11. a sliding block; 12. a rotation shaft; 13. a swing arm; 14. a support frame; 15. an upper frame; 16. an upright frame; 17. a rotation member; 170. a guiding surface; 18. a swing member; 180. a projection; 181. a U-shaped portion; 190. a first locking part; 191. a second locking part; 192. a convex column; 21. a guide rail.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

As shown in fig.s 1-4, a bottle blowing machine comprises a machine frame 100, a mould opening and closing assembly disposed on the machine frame, an elevating assembly, a bottom locking assembly and a driving assembly for driving the above assemblies.

The assemblies will be illustrated hereinafter in more detail: the mould opening and closing assembly which has a mould opening state and a mould closing state comprises a fixed mould plate 2 fixedly disposed on the machine frame 100, a bottom mould 1 slidable in a vertical direction relative to the fixed mould plate, and a moving mould plate 3 rotatably connected with the fixed mould plate 2 by a rotation shaft 12. When the mould opening and closing assembly is in the mould closing state, the fixed mould plate 2, the moving mould plate 3 and the bottom mould 1 together enclose to provide a cavity.

The elevating assembly comprises a protrusion 9 fixedly disposed on the rotation shaft 12, an elevating rod 10 fixedly connected with the bottom mould 1, and a sliding block 11 fixed on the elevating rod 10. A guiding groove 90 is opened on the protrusion 9, and the sliding block 11 is slidably inserted into the guiding groove 90. In the course of rotation of the rotation shaft 12, the contact position of the guiding groove 90 and the sliding block 11 rises or descends, and the sliding block 11 moves in the up-down direction under the guiding of the guiding groove 90.

The bottom mould locking assembly comprises: a first locking part 190 slidably disposed on the machine frame 100; a swing member 18 for driving the sliding of the first locking part 190, the swing member 18 is swingably connected with the machine frame 100 around a first axis; a rotation member 17 for controlling the swinging of the swing member 18 relative to the machine frame 100, the rotation member 17 is rotatable relative to the machine frame 100 around a second axis and fixedly connected with the rotation shaft 12; and a second locking part 191 fixedly disposed on the moving mould plate 3. When the mould opening and closing assembly is in the mould closing state, the first locking part 190 and the second locking part 191 respectively contact against the bottom mould 1 such that the bottom mould 1 is separated from the machine frame 100. The rotation shaft 12 sequentially extends through the moving mould plate 3, the rotation member 17 and the protrusion 9 from up to down.

The power source is used for driving the rotation of the rotation shaft 12.

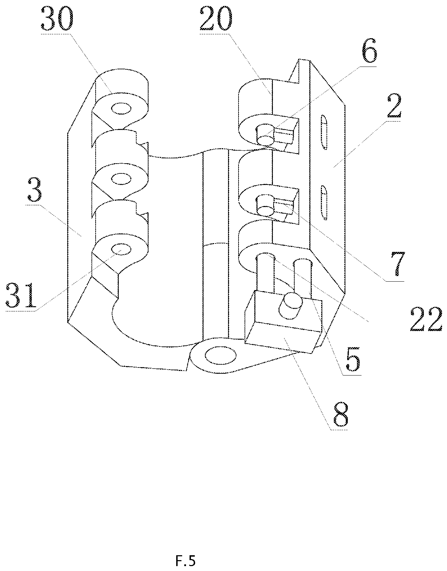

As shown in fig.5, the mould opening and closing assembly also comprises a locking mechanism for locking the moving mould plate 3 with the fixed mould plate 2 when in the mould closing state. The moving mould plate 3 is provided with at least one first connecting protrusion 30 on which a pin hole 31 is opened. The fixed mould plate 2 is provided with a second connecting protrusion 20 staggered with the first connection protrusion 30 in up-down direction. The locking mechanism comprises a connecting shaft 5 slidably disposed on the fixed mould plate 2, a connecting rod 7 fixedly connected with the connecting shaft 5 and a locking pin 6 fixedly connected with the connecting rod 7. A hole 22 is opened on the second connecting protrusion 20 for the connecting rod 7 and the locking pin 6 sliding therein. When the mould opening and closing assembly is in the mould opening state, the locking pin 6 is positioned in the hole 22, and when the mould opening and closing assembly is in the mould closing state, the locking pin 6 slides relative to the second connecting protrusion 20 and extends through the hole 22 to insert into the pin hole 31.

The rotation member 17 has a guiding surface 170 thereon. A projection 180 is formed on the swing member 18 and the projection 180 slidably contacts with the guiding surface 170 relative to each other, and the distance between the contact position of the projection 180 with the guiding surface 170 and the second axis changes with the rotation of the rotation member 7.

An elastic member is arranged between the swing member 18 and the machine frame 100 for providing a restoring force for the swing member 18. A convex column 192 is formed on the first locking part 190 and a U-shaped portion 181 is formed on the swing member 18 at a distance from the first axis, and the convex column 192 is slidably inserted into the U-shaped portion 181.

The machine frame 100 comprises a support frame 14, an upper frame 15 located above the support frame 14 and an upright frame 16 fixedly connected between the support frame 14 and the upper frame 15. The mould opening and closing assembly and bottom locking assembly are located above the support frame 14, and the protrusion 9 is located below the support frame 14.

A first through-hole for the elevating rod 10 extending through therein and a second through-hole for the rotation shaft 12 extending through therein are opened on the support frame 14. The elevating rod 10 is slidable in the first through-hole in the up-down direction, and the rotation shaft 12 is rotatable in the second through-hole. An upper end of the rotation shaft 12 is rotatably connected with the upper frame 15.

The first axis and second axis are parallel to each other. The rotation member 17, the swing member 18 and the first locking part 190 are located above the upper surface of the support frame 14.

A swing arm 13 is connected on the lower end of the rotation shaft 12 for driving the rotation shaft 12. The power source drives the rotation of the rotation shaft 12 by means of the swing arm 13. The swing arm 13 is fixedly connected with the lower end of the rotation shaft 12.

The axis of rotation of the rotation shaft 12 is parallel to the direction of movement of the elevating rod 10 relative to the machine frame. The guiding groove 90 inclinedly extends relative to a plane perpendicular to the axis of rotation.

The protrusion 9 has an arc-shaped side on which the guiding groove 90 is opened, and the central axis of the circumference where the arc-shaped side is and the axis of rotation of the rotation shaft 12 coincide.

The moving mould plate 3 is substantially provided disposed along a vertical direction and the extending direction of height of the moving mould plate 3 is parallel to the shaft axis of the rotation shaft 12.

The above embodiment is described for illustrating the technical concept and features of the invention, the aim is intended to enable a person skilled in the art to appreciate the content of the invention and further implement it, and the protecting scope of the invention can not be limited hereby.

## Claims

1. A bottle blowing machine, comprising
a machine frame (100);
a mould opening and closing assembly having a mould opening state and a mould closing state, which comprises a fixed mould plate fixedly disposed on the machine frame (100), a bottom mould (1) slidable in a vertical direction relative to the fixed mould plate, and a moving mould plate (3) rotatably connected with the fixed mould plate (2) by a rotation shaft (12), when the mould opening and closing assembly is in the mould closing state, the fixed mould plate (2), the moving mould plate (3) and the bottom mould (1) together enclose to provide a cavity;
an elevating assembly comprising a protrusion (9) fixedly disposed on the rotation shaft (12), an elevating rod (10) fixedly connected with the bottom mould (1), and a sliding block (11) fixed on the elevating rod (10), a guiding groove (90) being opened on the protrusion (9), and the sliding block (11) being slidably inserted into the guiding groove (90), in the course of rotation of the rotation shaft (12), the contact position of the guiding groove (90) with the sliding block (11) rises or descends, and the sliding block (11) moves in up-down direction under the guiding of the guiding groove (90);
a bottom mould locking assembly comprising a first locking part (190) slidably disposed on the machine frame (100), a swing member (18) swingably connected with the machine frame (100) around a first axis for driving the sliding of the first locking part (190), a rotation member (17) fixedly connected with the rotation shaft (12) and rotatable relative to the machine frame (100) around a second axis for controlling the swinging of the swing member (18) relative to the machine frame (100), and a second locking part (191) fixedly disposed on the moving mould plate (3), when the mould opening and closing assembly is in the mould closing state, the first locking part (190) and the second locking part (191) respectively contact against the bottom mould (1) such that the bottom mould (1) is separated from the machine frame (100); and
a power source for driving the rotation of the rotation shaft (12).

2. The bottle blowing machine as claimed in claim 1, wherein the rotation shaft (12) sequentially extends through the moving mould plate (3), the rotation member (17) and the protrusion (9) from up to down.

3. The bottle blowing machine as claimed in claim 1, wherein the mould opening and closing assembly also comprises a locking mechanism for locking the moving mould plate (3) with the fixed mould plate (2) in the mould closing state, the locking mechanism comprising a connecting shaft (5) slidably disposed on the fixed mould plate (2), a connecting rod (7) fixedly connected with the connecting shaft (5) and a locking pin (6) fixedly connected with the connecting rod (7), at least one first connecting convex platform (30) being provided on the moving mould plate (3), and a pin hole (31) being opened on the connecting convex platform (30), a second connecting convex platform (20) staggered with the first connection protrusion (30) in up-down direction being provided on the fixed mould plate (2), and a hole (22) being opened on the second connecting protrusion (20) for the connecting rod (7) and the locking pin (6) sliding therein, when t in the mould opening state, the locking pin (6) is positioned in the hole (22), and when in the mould closing state, the locking pin (6) slides relative to the second connecting protrusion (20) and extends through the hole (22) to insert into the pin hole (31).

4. The bottle blowing machine as claimed in claim 1, wherein the rotation member (17) has a guiding surface (170) thereon and a projection (180) is formed on the swing member (18), the projection (180) slidably contacting with the guiding surface (170) relative to each other, and the distance between the contact position of the projection (180) with the guiding surface (170) and the second axis changing with the rotation of the rotation member (7).

5. The bottle blowing machine as claimed in claim 1, wherein an elastic member is arranged between the swing member (18) and the machine frame (100) for providing a restoring force for the swing member (18), a convex column (192) being formed on the first locking part (190) and a U-shaped portion (181) being formed on the swing member (18) at a distance from the first axis, and the convex column (192) being slidably inserted into the U-shaped portion (181).

6. The bottle blowing machine as claimed in any of claims 1-5, wherein the machine frame (100) comprises a support frame (14), an upper frame (15) located above the support frame (14) and an upright frame (16) fixedly connected between the support frame (14) and the upper frame (15), the mould opening and closing assembly and bottom mould locking assembly being located above the support frame (14), and the protrusion (9) being located below the support frame (14).

7. The bottle blowing machine as claimed in claim 6, wherein a first through-hole for the elevating rod (10) extending through therein and a second through-hole for the rotation shaft (12) extending through therein respectively are opened on the support frame (14), the elevating rod (10) being slidable in the first through-hole in the up-down direction, and the rotation shaft (12) being rotatable in the second through-hole.

8. The bottle blowing machine as clamed in claim 6, wherein an upper end of the rotation shaft (12) is rotatably connected with the upper frame (15).

9. The bottle blowing machine as clamed in claim 6, wherein the first axis and second axis are parallel to each other, the rotation member (17), the swing member (18) and the first locking part (190) being located above an upper surface of the support frame (14).

10. The bottle blowing machine as clamed in claim 1, wherein a swing arm (13) is connected on a lower end of the rotation shaft (12), and the power source driving the rotation of the rotation shaft (12) by the swing arm (13).

11. The bottle blowing machine as clamed in claim 10, wherein the swing arm (13) is fixedly connected with the lower end of the rotation shaft (12).

12. The bottle blowing machine as clamed in claim 1, wherein the axis of rotation of the rotation shaft (12) is parallel to the direction of movement of the elevating rod (10) relative to the machine frame (100), and the guiding groove (90) inclinedly extending relative to a plane perpendicular to the axis of rotation.

13. The bottle blowing machine as clamed in claim 12, wherein the protrusion (9) has an arc-shaped side on which the guiding groove (90) is opened, the central axis of the circumference where the arc-shaped side is and the axis of rotation of the rotation shaft (12) coincide.

14. The bottle blowing machine as clamed in claim 1, wherein the moving mould plate (3) is substantially provided along a vertical direction and the extending direction of height of the moving mould plate (3) is parallel to the shaft axis of the rotation shaft (12).

## Patentansprüche

1. Flaschenblasmaschine mit:
einem Maschinenrahmen (100);
einer Formöffnungs- und Schließanordnung mit einem Formöffnungszustand und einem Formschließzustand, die eine feststehende Formplatte, die fest auf dem Maschinenrahmen (100) angeordnet ist, eine untere Form (1), die relativ zur feststehenden Formplatte in einer vertikalen Richtung verschiebbar ist, und eine bewegbare Formplatte (3) aufweist, die mit der feststehenden Formplatte (2) durch eine Drehwelle (12) drehbar verbunden ist, wobei, wenn sich die Formöffnungs- und Schließanordnung im Formschließzustand befindet, die feststehende Formplatte (2), die bewegbare Formplatte (3) und die unteren Form (1) zusammen einen Hohlraum umschließen;
einer Hubanordnung, die einen fest auf der Drehwelle (12) angeordneten Vorsprung (9), eine mit der unteren Form (1) fest verbundene Hubstange (10) und einen an der Hubstange (10) befestigten Gleitblock (11) aufweist, wobei eine Führungsnut (90) im Vorsprung (9) ausgebildet ist, und wobei der Gleitblock (11) in die Führungsnut (90) gleitend eingesetzt ist, wobei im Verlauf einer Drehbewegung der Drehwelle (12) die Kontaktposition der Führungsnut (90) mit dem Gleitblock (11) ansteigt oder absinkt, und wobei der Gleitblock (11) sich unter der Führung der Führungsnut (90) in einer Aufwärts-Abwärtsrichtung bewegt;
einer Anordnung zum Verriegeln der unteren Form mit einem ersten Verriegelungsteil (190), das auf dem Maschinenrahmen (100) gleitend angeordnet ist, einem Schwenkelement (18), das mit dem Maschinenrahmen (100) um eine erste Achse schwenkbar verbunden ist, um die Gleitbewegung des ersten Verriegelungsteils (190) anzutreiben, einem Drehelement (17), das mit der Drehwelle (12) fest verbunden und relativ zum Maschinenrahmen (100) um eine zweite Achse drehbar ist, zum Steuern der Schwenkbewegung des Schwenkelements (18) relativ zum Maschinenrahmen (100), und einem zweiten Verriegelungsteil (191), das fest auf der bewegbaren Formplatte (3) angeordnet ist, wobei, wenn sich die Formöffnungs- und Schließanordnung im Formschließzustand befindet, das erste Verriegelungsteil (190) und das zweite Verriegelungsteil (191) jeweils mit der unteren Form (1) in Kontakt stehen, so dass die untere Form (1) vom Maschinenrahmen (100) getrennt ist; und
einer Antriebsquelle zum Antreiben der Drehbewegung der Drehwelle (12).

2. Flaschenblasmaschine nach Anspruch 1, wobei sich die Drehwelle (12) nacheinander von oben nach unten durch die bewegbare Formplatte (3), das Drehelement (17) und den Vorsprung (9) erstreckt.

3. Flaschenblasmaschine nach Anspruch 1, wobei die Formöffnungs- und Schließanordnung außerdem einen Verriegelungsmechanismus zum Verriegeln der bewegbaren Formplatte (3) mit der feststehenden Formplatte (2) im Formschließzustand aufweist, wobei der Verriegelungsmechanismus einen auf der feststehenden Formplatte (2) gleitend angeordneten Verbindungsschaft (5), eine Verbindungsstange (7), die mit dem Verbindungsschaft (5) fest verbunden ist, und einen Verriegelungsstift (6) aufweist, der mit der Verbindungsstange (7) fest verbunden ist, wobei mindestens eine erste konvexe Verbindungsplattform (30) auf der bewegbaren Formplatte (3) vorgesehen ist, und wobei ein Stiftloch (31) in der konvexen Verbindungsplattform (30) ausgebildet ist, wobei eine zweite konvexe Verbindungsplattform (20), die bezüglich des ersten Verbindungsvorsprungs (30) in einer Aufwärts-Abwärtsrichtung versetzt ist, auf der feststehenden Formplatte (2) bereitgestellt ist, und wobei ein Loch (22) für die Verbindungsstange (7) und den darin gleitenden Verriegelungsstift (6) im zweiten Verbindungsvorsprung (20) ausgebildet ist, wobei im Formöffnungszustand der Verriegelungsstift (6) im Loch (22) angeordnet ist, und im Formschließzustand der Verriegelungsstift (6) relativ zum zweiten Verbindungsvorsprung (20) gleitet und sich durch das Loch (22) erstreckt, um in das Stiftloch (31) einzudringen.

4. Flaschenblasmaschine nach Anspruch 1, wobei das Drehelement (17) eine Führungsfläche (170) aufweist und ein Vorsprung (180) auf dem Schwenkelement (18) ausgebildet ist, wobei der Vorsprung (180) und die Führungsfläche (170) relativ zueinander in Gleitkontakt stehen, und wobei der Abstand zwischen der Kontaktposition des Vorsprungs (180) mit der Führungsfläche (170) und der zweiten Achse sich mit der Drehbewegung des Drehelements (7) ändert.

5. Flaschenblasmaschine nach Anspruch 1, wobei zwischen dem Schwenkelement (18) und dem Maschinenrahmen (100) ein elastisches Element zum Bereitstellen einer Rückstellkraft für das Schwenkelement (18) angeordnet ist, eine konvexe Säule (192) auf dem ersten Verriegelungsteil (190) ausgebildet ist, und ein U-förmiger Abschnitt (181) auf dem Schwenkelement (18) in einem Abstand von der ersten Achse ausgebildet ist, und wobei die konvexe Säule (192) in den U-förmigen Abschnitt (181) gleitend eingesetzt ist.

6. Flaschenblasmaschine nach einem der Ansprüche 1 bis 5, wobei der Maschinenrahmen (100) einen Stützrahmen (14), einen oberhalb des Stützrahmens (14) angeordneten oberen Rahmen (15) und einen aufrechten Rahmen (16) aufweist, der zwischen dem Stützrahmen (14) und dem oberen Rahmen (15) fest verbunden ist, wobei die Formöffnungs- und Schließanordnung und die Anordnung zum Verriegeln der unteren Form oberhalb des Stützrahmens (14) angeordnet sind und der Vorsprung (9) unterhalb des Stützrahmens (14) angeordnet ist.

7. Flaschenblasmaschine nach Anspruch 6, wobei ein erstes Durchgangsloch für die sich dadurch erstreckende Hubstange (10) und ein zweites Durchgangsloch für die sich dadurch erstreckende Drehwelle (12) im Stützrahmen (14) ausgebildet sind, wobei die Hubstange (10) im ersten Durchgangsloch in der Aufwärts-Abwärtsrichtung gleitend angeordnet ist und die Drehwelle (12) im zweiten Durchgangsloch drehbar ist.

8. Flaschenblasmaschine nach Anspruch 6, wobei ein oberes Ende der Drehwelle (12) drehbar mit dem oberen Rahmen (15) verbunden ist.

9. Flaschenblasmaschine nach Anspruch 6, wobei die erste Achse und die zweite Achse sich parallel zueinander erstrecken, und wobei das Drehelement (17), das Schwenkelement (18) und das erste Verriegelungsteil (190) oberhalb einer oberen Fläche des Stützrahmens (14) angeordnet sind

10. Flaschenblasmaschine nach Anspruch 1, wobei ein Schwenkarm (13) mit einem unteren Ende der Drehwelle (12) verbunden ist und die Antriebsquelle die Drehbewegung der Drehwelle (12) durch den Schwenkarm (13) antreibt.

11. Flaschenblasmaschine nach Anspruch 10, wobei der Schwenkarm (13) mit dem unteren Ende der Drehwelle (12) fest verbunden ist.

12. Flaschenblasmaschine nach Anspruch 1, wobei die Drehachse der Drehwelle (12) sich parallel zur Bewegungsrichtung der Hubstange (10) relativ zum Maschinenrahmen (100) erstreckt, und wobei die Führungsnut (90) sich relativ zu einer Ebene geneigt erstreckt, die sich senkrecht zur Drehachse erstreckt.

13. Flaschenblasmaschine nach Anspruch 12, wobei der Vorsprung (9) eine bogenförmige Seite aufweist, in der die Führungsnut (90) ausgebildet ist, wobei die Mittelachse des Umfangs, wo sich die bogenförmige Seite befindet, und die Drehachse der Drehwelle (12) zusammenfallen.

14. Flaschenblasmaschine nach Anspruch 1, wobei die bewegbare Formplatte (3) im Wesentlichen entlang einer vertikalen Richtung angeordnet ist und die Höhen-Erstreckungsrichtung der bewegbaren Formplatte (3) sich parallel zur Wellenachse der Drehwelle (12) erstreckt.

## Revendications

1. Machine de soufflage de bouteille, comprenant
un bâti de machine (100) ;
un ensemble d'ouverture et de fermeture de moule ayant un état d'ouverture de moule et un état de fermeture de moule, qui comprend une plaque de moule fixe disposée à demeure sur le bâti de machine (100), un fond de moule (1) pouvant coulisser dans une direction verticale par rapport à la plaque de moule fixe, et une plaque de moule mobile (3) raccordée en rotation à la plaque de moule fixe (2) par un arbre de rotation (12), lorsque l'ensemble d'ouverture et de fermeture de moule est dans l'état de fermeture de moule, la plaque de moule fixe (2), la plaque de moule mobile (3) et le fond de moule (1) se renferment ensemble pour fournir une cavité ;
un ensemble d'élévation comprenant une protubérance (9) disposée à demeure sur l'arbre de rotation (12), une tige d'élévation (10) raccordée à demeure au fond de moule (1), et un bloc de coulissement (11) fixé sur la tige d'élévation (10), une gorge de guidage (90) étant ouverte sur la protubérance (9), et le bloc de coulissement (11) étant inséré coulissant dans la gorge de guidage (90), au cours de la rotation de l'arbre de rotation (12), la position de contact de la gorge de guidage (90) avec le bloc de coulissement (11) monte ou descend, et le bloc de coulissement (11) se déplace dans une direction de haut en bas sous le guidage de la gorge de guidage (90) ;
un ensemble de blocage de fond de moule comprenant une première partie de blocage (190) disposée coulissante sur le bâti de machine (100), un organe d'oscillation (18) raccordé oscillant au bâti de machine (100) autour d'un premier axe pour entraîner le coulissement de la première partie de blocage (190), un organe de rotation (17) raccordé à demeure à l'arbre de rotation (12) et pouvant tourner par rapport au bâti de machine (100) autour d'un second axe pour commander l'oscillation de l'organe d'oscillation (18) par rapport au bâti de machine (100), et une seconde partie de blocage (191) disposée à demeure sur la plaque de moule mobile (3), lorsque l'ensemble d'ouverture et de fermeture de moule est dans l'état de fermeture de moule, la première partie de blocage (190) et la seconde partie de blocage (191) viennent respectivement en contact contre le fond de moule (1) de sorte que le fond de moule (1) soit séparé du bâti de machine (100) ; et
une source de puissance pour entraîner la rotation de l'arbre de rotation (12).

2. Machine de soufflage de bouteille selon la revendication 1, dans laquelle l'arbre de rotation (12) s'étend séquentiellement à travers la plaque de moule mobile (3), l'organe de rotation (17) et la protubérance (9) de haut en bas.

3. Machine de soufflage de bouteille selon la revendication 1, dans laquelle l'ensemble d'ouverture et de fermeture de moule comprend également un mécanisme de blocage pour bloquer la plaque de moule mobile (3) avec la plaque de moule fixe (2) dans l'état de fermeture de moule, le mécanisme de blocage comprenant un arbre de raccordement (5) disposé coulissant sur la plaque de moule fixe (2), une tige de raccordement (7) raccordée à demeure à l'arbre de raccordement (5) et une goupille de blocage (6) raccordée à demeure à la tige de raccordement (7), au moins une plateforme convexe de raccordement (30) étant prévue sur la plaque de moule mobile (3), et un trou de goupille (31) étant ouvert sur la plateforme convexe de raccordement (30), une seconde plateforme convexe de raccordement (20) en quinconce avec la première protubérance de raccordement (30) dans une direction de haut en bas étant prévue sur la plaque de moule fixe (2), et un trou (22) étant ouvert sur la seconde protubérance de raccordement (20) pour la que tige de raccordement (7) et la goupille de blocage (6) coulissent à l'intérieur, lorsqu'elle est dans l'état d'ouverture de moule, la goupille de blocage (6) est positionnée dans le trou (22), et lorsqu'elle est dans l'état de fermeture de moule, la goupille de blocage (6) coulisse par rapport à la seconde protubérance de raccordement (20) et s'étend à travers le trou (22) pour s'insérer dans le trou de goupille (31).

4. Machine de soufflage de bouteille selon la revendication 1, dans laquelle l'organe de rotation (17) a une surface de guidage (170) dessus et une saillie (180) est formée sur l'organe d'oscillation (18), la saillie (180) venant en contact coulissant avec la surface de guidage (170) l'une par rapport à l'autre, et la distance entre la position de contact de la saillie (180) avec la surface de guidage (170) et le second axe changeant avec la rotation de l'organe de rotation (7).

5. Machine de soufflage de bouteille selon la revendication 1, dans laquelle un organe élastique est agencé entre l'organe d'oscillation (18) et le bâti de machine (100) pour fournir une force de rappel à l'organe d'oscillation (18), une colonne convexe (192) étant formée sur la première partie de blocage (190) et une portion en forme de U (181) étant formée sur l'organe d'oscillation (18) à distance du premier axe, et la colonne convexe (192) étant insérée coulissante dans la portion en forme de U (181).

6. Machine de soufflage de bouteille selon l'une quelconque des revendications 1 à 5, dans laquelle le bâti de machine (100) comprend un bâti de support (14), un bâti supérieur (15) situé au-dessus du bâti de support (14) et un bâti droit (16) raccordé à demeure entre le bâti de support (14) et le bâti supérieur (15), l'ensemble d'ouverture et de fermeture de moule et l'ensemble de blocage de fond de moule étant situés au-dessus du bâti de support (14), et la protubérance (9) étant située en dessous du bâti de support (14).

7. Machine de soufflage de bouteille selon la revendication 6, dans laquelle un premier trou traversant pour la tige d'élévation (10) s'étendant au travers et un second trou traversant pour l'arbre de rotation (12) s'étendant au travers sont ouverts respectivement sur le bâti de support (14), la tige d'élévation (10) pouvant coulisser dans le premier trou traversant dans la direction de haut en bas, et l'arbre de rotation (12) pouvant tourner dans le second trou traversant.

8. Machine de soufflage de bouteille selon la revendication 6, dans laquelle une extrémité supérieure de l'arbre de rotation (12) est raccordée en rotation au bâti supérieur (15).

9. Machine de soufflage de bouteille selon la revendication 6, dans laquelle le premier axe et le second axe sont parallèles l'un à l'autre, l'organe de rotation (17), l'organe d'oscillation (18) et la première partie de blocage (190) étant situés au-dessus d'une surface supérieure du bâti de support (14).

10. Machine de soufflage de bouteille selon la revendication 1, dans laquelle un bras oscillant (13) est raccordé sur une extrémité inférieure de l'arbre de rotation (12), et la source de puissance entraîne la rotation de l'arbre de rotation (12) par le bras oscillant (13).

11. Machine de soufflage de bouteille selon la revendication 10, dans laquelle le bras oscillant (13) est raccordé à demeure à l'extrémité inférieure de l'arbre de rotation (12).

12. Machine de soufflage de bouteille selon la revendication 1, dans laquelle l'axe de rotation de l'arbre de rotation (12) est parallèle à la direction de déplacement de la tige d'élévation (10) par rapport au bâti de machine (100), et la gorge de guidage (90) s'étend de façon inclinée par rapport à un plan perpendiculaire à l'axe de rotation.

13. Machine de soufflage de bouteille selon la revendication 12, dans laquelle la protubérance (9) a un côté en forme d'arc sur lequel la gorge de guidage (90) est ouverte, l'axe central de la circonférence où se trouve le côté en forme d'arc et l'axe de rotation de l'arbre de rotation (12) coïncident.

14. Machine de soufflage de bouteille selon la revendication 1, dans laquelle la plaque de moule mobile (3) est prévue sensiblement suivant une direction verticale et la direction d'extension de hauteur de la plaque de moule mobile (3) est parallèle à l'axe d'arbre de l'arbre de rotation (12).
